Europäisches Patentamt

European Patent Office

Office européen des brevets

(19)

(11)  **EP 1 443 699 A1**

(12)  **EUROPEAN PATENT APPLICATION**

(43)  Date of publication:
**04.08.2004  Bulletin 2004/32**

(51)  Int Cl.[7]: **H04L 9/30**, G06F 7/72

(21)  Application number: **03018622.5**

(22)  Date of filing: **19.08.2003**

(84)  Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30)  Priority:  **23.01.2003  JP 2003014136**

(71)  Applicant: **Hitachi, Ltd.
Chiyoda-ku, Tokyo (JP)**

(72)  Inventors:
• **Endo, Takashi, Hitachi, Ltd., Intell. Prop. Gr.
Chiyoda-ku, Tokyo 100-8220 (JP)**
• **Kaminaga, Masahiro, Hitachi Ltd.,
Intell.Prop. Gr.
Chiyoda-ku, Tokyo 100-8220 (JP)**
• **Watanabe, Takashi, Hitachi Ltd., Intell.Prop. Gr.
Chiyoda-ku, Tokyo 100-8220 (JP)**

(74)  Representative: **Beetz & Partner Patentanwälte
Steinsdorfstrasse 10
80538 München (DE)**

(54)  **Information processing means and IC card**

(57)  As fast algorithm for RSA cryptosystem, a calculation method employing the Chinese Remainder Theorem is widely used today. However, modular calculation modulo P (P: secret prime) has to be carried out in the first step of the calculation, and the modular calculation x mod P, explicitly using the secret prime P, has been used as the target of attack from long ago. To resolve the problem, there is provided a calculation method, in which x mod P is calculated not directly, but $x \cdot (2^n) \bmod P$ is calculated by previously multiplying x by $2^{(m+n)} \bmod P$ or $2^{(2n)} \bmod P$ and multiplying the result by $2^{(-m)}$ or $2^{(-n)}$ afterward. When Montgomery modular multiplication is used, subsequent process is carried out according to the conventional method. When a general modular multiplication method is used, the result of the modular exponentiation operation is corrected by multiplying the result by $(2^{(-n)})^{(2^n-1)} \bmod P$.

**FIG.5**

$$\text{CALCULATE } A_R = xR \bmod P \ (1)$$

$$U := 2^m \bmod P$$
$$U_{sqr} := 2^{2n} U \bmod P$$
5030

$$A_R := x \cdot U_{sqr} \cdot U^{-1} \bmod P$$
5040

$$A_R := A_R \cdot R^{-1} \bmod P$$
$$(R := 2^n \bmod P)$$
5050

CONTINUE TO 2050

EP 1 443 699 A1

**Description**

BACKGROUND OF THE INVENTION

The present invention relates to an information processing method, and in particular, to a technique employed for a tamper resistant device such as an IC card having high confidentiality.

Description of the Related Art

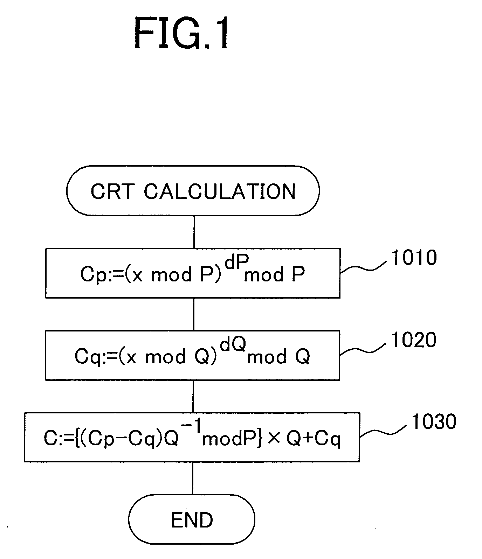

In CRT (Chinese Remainder Theorem) calculation which is used as fast algorithm for RSA cryptosystem, a remainder x mod P is calculated in the first step of the calculation. Fig. 1 is a flow chart showing a processing flow of a CRT calculation method. First, a modular exponentiation operation is done to a value reduced in modulo P (1010) while another modular exponentiation operation is done to a value reduced in modulo Q (1020). Finally, the results of two modular exponentiation operations are combined to obtain the end result (1030). In the first step of each modular exponentiation operation (1010, 1020) with regard to the value reduced in modulo P or Q, the remainder of x modulo P or Q (P, Q: secret exponents) has to be obtained. The modular exponentiation operation can be carried out by repeating modular multiplication.
For the exponentiation calculation in the steps 1010 and 1020, the so-called "addition chain" method is generally used. In an addition chain for calculating $Z = A^L$ for example, the exponent L is expressed in a binary form as:

$$L = L[n-1]*2^{\wedge}(n-1) + L[n-2]*2^{\wedge}(n-2) + ...$$

$$+ L[1] *2^{\wedge}1 + L[0] *2^{\wedge}0 \qquad (1)$$

where the operator "^" means power and "*" means multiplication.
Using the low of exponent in which the addition in the exponent means multiplication and the multiplication in the exponent means power, the calculation $Z = A^L$ is expressed as:

$$Z := (... ( ( (A^{\wedge}L [n-1] ) {}^{\wedge}2 * (A^{\wedge}L [n-2 ] ) ) {}^{\wedge}2 * ... *$$

$$(A^{\wedge}L[0]) \qquad (2)$$

The value $A^L[i]$ equals A when $L[i] = 1$ and 1 when $L[i] = 0$, therefore, omitting the multiplications by 1 (when $L[i] = 0$), $Z = A^L$ can be calculated by performing several multiplications for the bits 1 in the binary expression of L and performing squaring calculation m-1 times.
The above calculation can be represented by the following program:

```
Z=1

for (i = n-1; i >= 0; i++){

  W := W*W;

  if (L[i]==1) then Z := Z*A; else W := W*1;

}
```

Methods for the modular multiplication can be classified into two groups: those employing Montgomery modular multiplication and others.

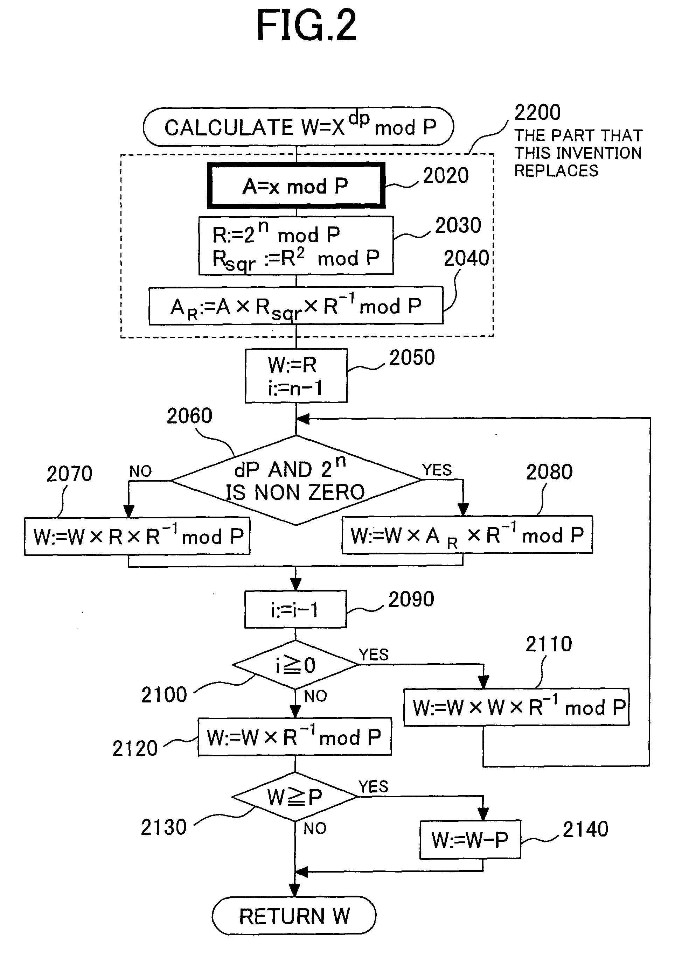

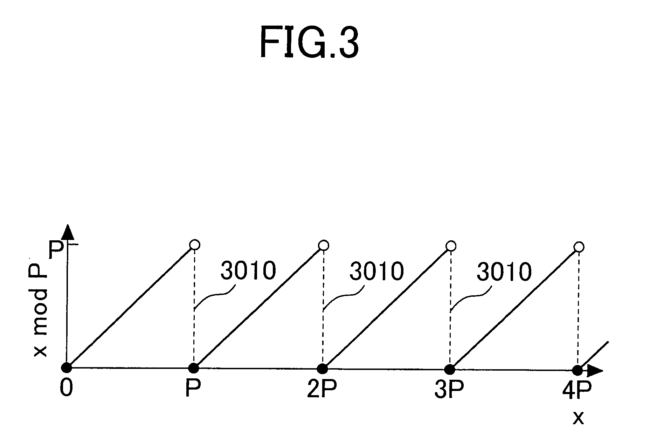

Fig. 2 is a flow chart showing a processing flow of the modular exponentiation operation by the addition chain when the Montgomery modular multiplication is employed. In Fig. 2, "n" denotes the number of bits enough for storing P. First, the remainder of x modulo P (the remainder of x divided by P) is obtained (2020). Since each multiplication in the Montgomery modular multiplication involves multiplication by $2^{\wedge}(-n)$ mod P, the operand is previously multiplied by $2^n$ (hereafter, $R = 2^n$). The operation multiplying the operand by R is also carried out by the Montgomery modular multiplication. The value A = x mod P is multiplied by previously calculated R^2 by means of the Montgomery modular multiplication, by which xR mod P is obtained (2040). Since the Montgomery modular multiplication is employed, the initial value of the operation is set not to 1 but to R (1 multiplied by R) (2050). In the multiplication process, each bit of the exponent will be extracted one by one starting from the most significant bit, therefore, a value n-1 indicating the position of the most significant bit is first set to a counter i (2050). Subsequently, whether each bit value of the exponent is 1 or not is checked starting from the highest bit (2060). If the bit value is 0 (NO in the step 2060), the current value W is multiplied by R (which means 1) (2070). Meanwhile, if the bit value is 1 (YES in the step 2060), the current value W is multiplied by A_R = xR mod P (2080). Incidentally, since the step 2070 for multiplying by R (meaning 1) has no effect on the calculation result, it can be omitted when the processing speed is important. Subsequently, the bit position counter i is decremented by 1 (2090) and whether the bit position has reached the least significant bit or not is checked (2100). If the bit position has not reached the least significant bit (YES in the step 2100), the current value is squared (2110) and the process from the step 2060 is repeated for the next bit of the exponent. If the process has already finished for the least significant bit (NO in the step 2100), the current value W is simply multiplied by the factor $2^{-n}$ in order to eliminate the effect of the previous multiplication by $2^n$. In the Montgomery modular multiplication, obtaining the product of the operand and 1 is equivalent to multiplying the operand by $2^{-n}$ (2120). Finally, when the result is P or more (YES in step 2130), P is subtracted from the result (2140). In the above processing flow, the result of the modular calculation of the step 2020 changes sharply depending on whether x is larger or smaller than a multiple of P (3010) as shown in Fig. 3, therefore, the step or the behavior might be used as an attack point.

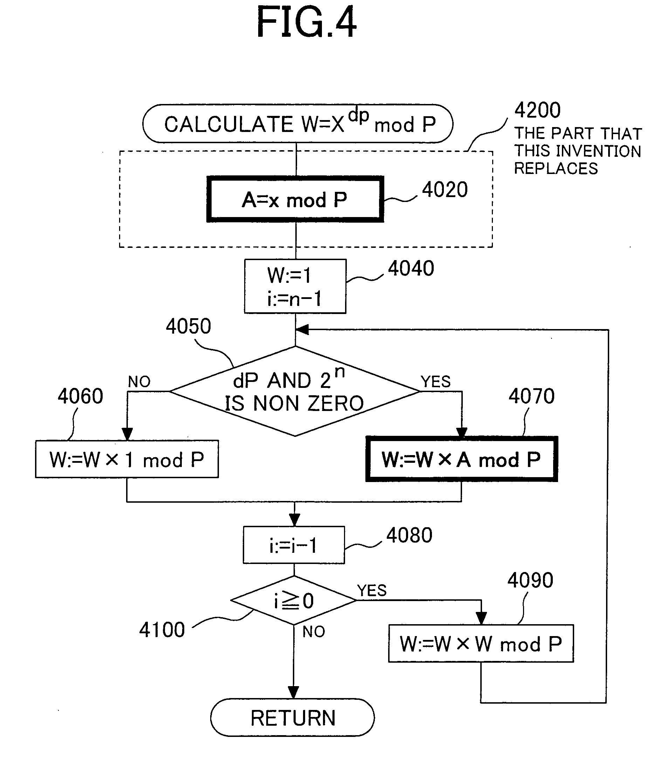

Fig. 4 is a flow chart showing a processing flow of the modular exponentiation operation by the addition chain when a modular multiplication method other than the Montgomery modular multiplication is employed. In Fig. 4, the bit length of P is expressed as "n". First, the remainder of x modulo P is obtained (4020). Similarly to the above example employing the Montgomery modular multiplication, there is a possibility that the calculation of the remainder modulo P might become an attack point. The initial value of the operation is set to 1 since an ordinary modular multiplication method is used, and a value n-1 indicating the position of the most significant bit is first set to a counter i so that each bit of the exponent will be extracted one by one starting from the most significant bit (4040). Subsequently, whether each bit value of the exponent is 1 or not is checked starting from the highest bit (4050). If the bit value is 1 (YES in the step 4050), the current value W is multiplied by A = x mod P (4070). If the bit value is 0 (NO in the step 4050), the current value W is multiplied by 1 (4060). Incidentally, the step 4060 for multiplying by 1, having no effect on the calculation result, can be omitted when the processing speed is important. The step 4070 might also become an attack point since the value of A = x mod P is used for the operand. Subsequently, the bit position is shifted rightward by 1 bit by decrementing the bit position counter i by 1 (4080) and whether the bit position has reached the least significant bit or not is checked (4100). If the bit position has not reached the least significant bit yet (YES in the step 4100), the current value W is squared (4090) and the above process is conducted for the next bit of the exponent. When the process is completed for the least significant bit (NO in the step 4100), the current value W becomes the final result of the operation.

As described above, in either case using or not using the Montgomery modular multiplication, the remainder of x modulo P has to be obtained at the first step of the operation, and thus there is a possibility that the modular calculation might become an attack point.

The RSA cryptosystem is a cryptographic technology generally used for authentication, sending a private key (secret key), etc. as a standard, and the reliability and safety of its calculation method have great importance for financial uses etc. Although a method employing the Chinese Remainder Theorem is widely used today as fast algorithm for the RSA cryptosystem, a modular calculation modulo P (P: secret prime) has to be conducted in the first step of the algorithm. The modular calculation, using the secret prime P explicitly, has been a target of attack from long ago. What becomes a problem in the modular calculation modulo P is that when x is close to a multiple of P (3010) as shown in Fig. 3, x mod P takes on large values (x mod P ≅ P) if x < kP, while taking on small values (x mod P ≅ 0) if x > kP. Due to the rapid change of x mod P across the boundary kP, there is a danger that whether the input x is larger or smaller than the secret exponent P might be detected as side channel information (electric current, etc.). The RSA cryptosystem is regarded as safe based on the fact that the product N of large prime numbers P and Q (approximately 512 bits at present) can not be factorized easily, and the number N as the product of the prime numbers P and Q is disclosed to the user as part of the public key. However, if the secret prime P or Q leaks out, the other secret prime Q = N/P or P = N/Q can be calculated easily and consequently, the private key d can be obtained by calculating the inverse element of the public key e modulo (P-1)(Q-1). The inverse calculation can be carried out easily by extended Euclid's algorithm.

SUMMARY OF THE INVENTION

It is therefore the primary object of the present invention to provide an information processing method or calculation method capable of carrying out the modular calculation for the CRT (Chinese Remainder Theorem) safely and at high speed.

In an information processing method in accordance with an aspect of the present invention, x mod P is calculated not directly, but $x*(2^n)$ mod P is calculated by previously multiplying x by $2^{(m+n)}$ mod P or $2^{(2n)}$ mod P and multiplying the result by $2^{(-m)}$ or $2^{(-n)}$ afterward. The number P, being a large prime number, is necessarily an odd number and thus is relatively prime with any power of 2. Hence there necessarily exists $2^{(-m)}$ mod P or $2^{(-n)}$ mod P. Further, even when the input x is close to P, the value of $x*(2^n)$ mod P does not change rapidly depending on whether x is larger or smaller than P, and $x*(2^n)$ mod P has a bit length close to that of P. By virtue of the above characteristics, it becomes impossible to estimate whether x is larger or smaller than P based on the leaked information, by which the leakage of the private key can be prevented. In the case where the Montgomery modular multiplication is employed, the $2^n$-multiplied form of the expression exactly follows the Montgomery field, therefore, the subsequent process can be conducted according to the conventional processing flow.

On the other hand, when the Montgomery modular multiplication is not employed, a correct result can be obtained by compensating for the effect of the multiplication by $2^n$ mod P, by multiplying the result of the exponentiation operation by $(2^{(-n)})^{(2^n-1)}$ mod P.

When a modular multiplication method other than the Montgomery modular multiplication is employed, multiplication and squaring are carried out and thereafter the result is multiplied by $R^{(-2)}$ mod P. It is also possible to previously calculate $R^{(-2m)}$ mod P and finally correct the result by multiplying by $R^{(-(2^m)+1)}$ mod P.

The objects and features of the present invention will become more apparent from the consideration of the following detailed description taken in conjunction with the accompanying drawings.

## BRIEF DESCRIPTION OF THE DRAWINGS

Fig. 1 is a flow chart showing a processing flow of a typical CRT calculation method for RSA cryptosystem;
Fig. 2 is a flow chart showing a processing flow of a conventional modular exponentiation operation for the CRT calculation method when Montgomery modular multiplication is employed;
Fig. 3 is a graph showing the relationship between the input x and the result of modular calculation x mod P (P: secret prime);
Fig. 4 is a flow chart showing a processing flow of a conventional modular exponentiation operation for the CRT calculation method when a general modular multiplication method is employed;
Fig. 5 is a flow chart showing a secure modular calculation process employing Montgomery modular multiplication in accordance with an embodiment of the present invention;
Fig. 6 is a flow chart showing another secure modular calculation process employing Montgomery modular multiplication in accordance with another embodiment of the present invention;
Fig. 7 is a flow chart showing a part of the secure modular calculation process employing Montgomery modular multiplication;
Fig. 8 is a flow chart showing a secure modular exponentiation process employing Montgomery modular multiplication in accordance with another embodiment of the present invention;
Fig. 9 is a flow chart showing a part of the secure modular exponentiation process;
Fig. 10 is a flow chart showing another part of the secure modular exponentiation process;
Fig. 11 is a flow chart showing another part of the secure modular exponentiation process;
Fig. 12 is a graph showing the bit length and humming weight of x mod P (x: input, P: secret prime) according to a conventional calculation method;
Fig. 13 is a graph showing the bit length and humming weight of $x*2^n$ mod P (x: input, P: secret prime) according to the present invention;
Fig.14 shows an example of IC card executing a modular calculation process and a modular exponentiation process shown in Figs. 5 to 11; and
Fig.15 shows an another example of IC card executing a modular calculation process and a modular exponentiation process in Figs. 5 to 11.

## DESCRIPTION OF THE EMBODIMENTS

Referring now to the drawings, a description will be given in detail of preferred embodiments in accordance with the present invention.

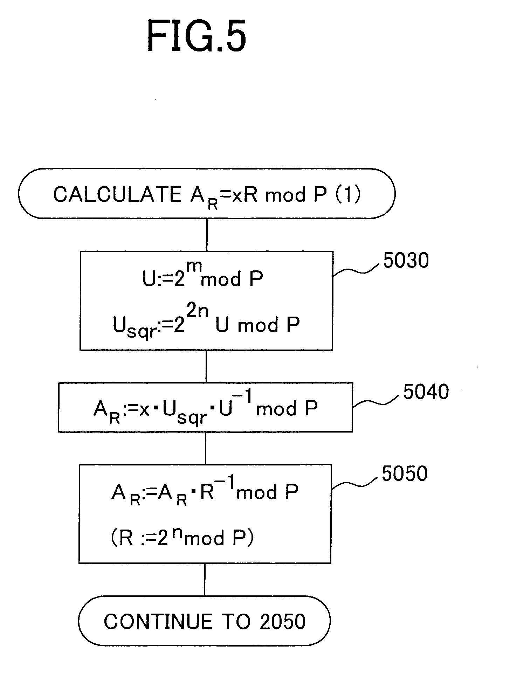

Fig. 5 is a flow chart showing an embodiment of the present invention in which the Montgomery modular multiplication is employed. In Fig. 5, the number "m" denotes a bit length necessary for storing the input x and "n" denotes a bit length necessary for storing P. The number m is necessarily larger than or equal to n ($m \geq n$) since $0 \leq x \leq P*Q$. First, $U = 2^m$ mod P and $U\_SQR = 2^{(2n)}U$ mod P are calculated (5030). Incidentally, the above symbol "\_"

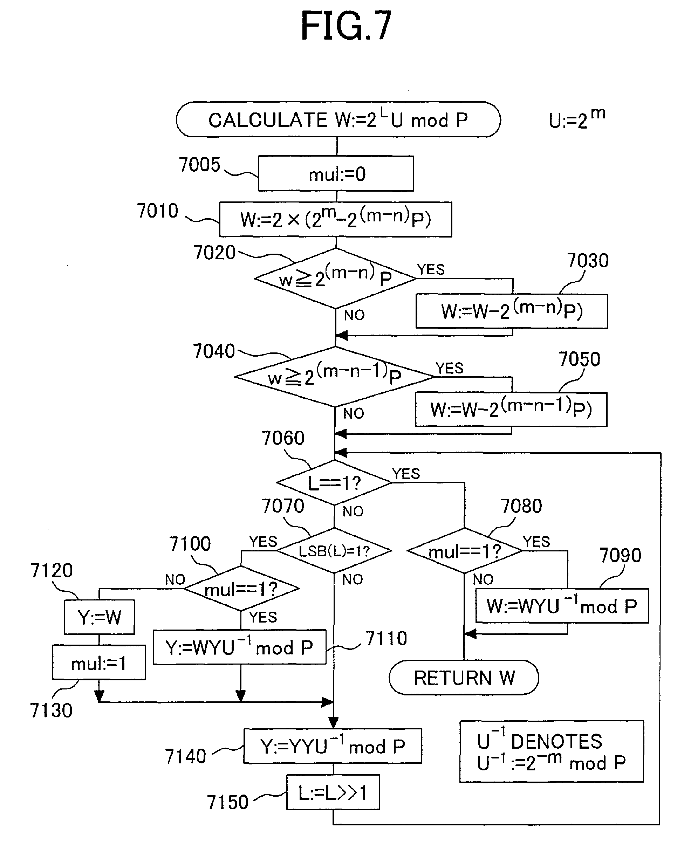

is used in this document to mean subscript. A detailed processing flow for calculating U_SQR = $2^{\wedge}(2n)$U mod P is shown in Fig. 7. While Fig. 7 shows a procedure for calculating $2^{\wedge}L*$U mod P, it can be used directly by substituting 2n into L (L = 2n). The bit length of U_SQR equals that of the longer one of m - 2n and n. The calculation of the step 5040 can be expressed as:

$$A\_R = (x*U\_SQR + M*P)/2^{\wedge}m \tag{3}$$

As x < $2^{\wedge}$m and M < $2^{\wedge}$m hold, the following inequality holds:

$$A\_R < U\_SQR + P \tag{4}$$

As the bit length of P is n or less, the bit length of A_R can be described as MAX (m-2n, n). Letting the bit length of A_R be n or less requires:

$$m-2n < n \tag{5}$$

that is:

$$m < 3n \tag{6}$$

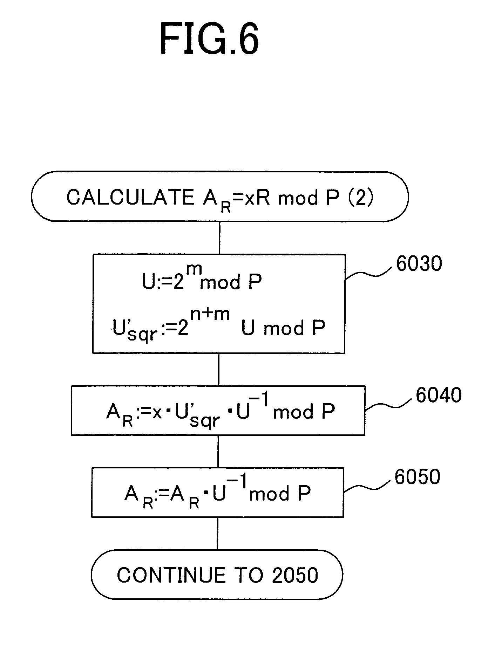

In ordinary cases, m $\cong$ 2n < 3n holds and thus the bit length of A_R equals n. In order to carry out step 5050, the result of the step 5040 is required to be n or less. When the condition m < 3n is not satisfied, another method of Fig. 6 in accordance with another embodiment of the present invention is carried out. The process of the step 5050 can be represented by a differently expression as:

$$(A\_R + (-A\_R*P^{\wedge}(-1) \text{ mod } 2^{\wedge}n)*P)/2^{\wedge}n \tag{7}$$

Since A_R < $2^{\wedge}$n and (-A_R*p^(-1) mod $2^{\wedge}$n) < $2^{\wedge}$n hold, the following inequality is satisfied:

$$(A\_R + (-A\_R*P^{\wedge}(-1) \text{ mod } 2^{\wedge}n)*P)/2^{\wedge}n < 1+P \tag{8}$$

Therefore, A_R after the step 5050 does not exceed P and thus can be expressed by n bits. Incidentally, A_R becomes equal to P in the step 5050 only when x is a multiple of P. The process of the steps 5030 through 5050 can be expressed as follows:

$$A\_R \equiv x*2^{\wedge}(2n)*2^{\wedge}m*2^{\wedge}(-m)*2^{\wedge}(-n) \text{ mod } P \tag{9}$$

$$\equiv x*2^{\wedge}(2n+m-m-n) \text{ mod } P \tag{10}$$

$$\equiv x*2^{\wedge}n \text{ mod } P \tag{11}$$

The subsequent process after the step 5050 can be conducted according to the aforementioned process starting from the step 2050 of Fig. 2. In the case where x is a multiple of P, the result is finally corrected in the steps 2130 and 2140 of Fig. 2.

Fig. 6 is a flow chart showing another embodiment of the present invention in which the Montgomery modular multiplication is employed. In Fig. 6, "m" denotes the bit length necessary for storing the input x and "n" denotes the bit length necessary for storing P. The number m is necessarily larger than or equal to n (m $\geq$ n) since $0 \leq x \leq P*Q$. First, U'_SQR = $2^{\wedge}(n+m)$U mod P is calculated according to the flow of Fig. 7 by letting L = n + m (6030). In order to conduct the process from step 6040, the number of bits of U'_SQR is required to be m or less, and the condition is always satisfied. The process of the step 6050 can be expressed as:

$$(A\_R + (-A\_R*P^{\wedge}(-1) \bmod 2^{\wedge}m)*P)/2^{\wedge}m) \tag{12}$$

Since A_R < 2^n and (-A_R*P^(-1) mod 2^m) < 2^m hold, the following inequality is satisfied:

$$(A\_R + (-A\_R*P^{\wedge}(-1) \bmod 2^{\wedge}m)*P)/2^{\wedge}m) < 1+P \tag{13}$$

Therefore, A_R after the step 6050 becomes P or less and can be expressed by n bits or less. Incidentally, A_R becomes equal to P in the step 6050 only when x is a multiple of P. The process of the steps 6030 through 6050 can be represented by one expression as:

$$A\_R \equiv x*2^{\wedge}(n+m)*2^{\wedge}m*2^{\wedge}(-m)*2^{\wedge}(-m) \bmod P \tag{14}$$

$$\equiv x*2^{\wedge}(n+m+m-m-m) \bmod P \tag{15}$$

$$\equiv x*2^{\wedge}n \bmod P \tag{16}$$

The subsequent process after the step 6050 can be conducted according to the aforementioned process starting from the step 2050 of Fig. 2. In the case where x is a multiple of P, the result is finally corrected in the steps 2130 and 2140 of Fig. 2. Differently from the previous embodiment of Fig. 5, the condition m < 3n is not required in this embodiment.

It is preferred in view of decreasing execution time to previously calculate U and $U_{sqr}$ of 5030 in Fig.5 and U and $U'_{sqr}$ of 6030 in Fig6 and store these data in memory before performing the calculations of steps 5040 and 6040.

Fig. 7 is a flow chart showing a procedure for calculating 2^L*U mod P which is necessary for the embodiments of Figs. 5 and 6. The flow of Fig. 7 calculates W := 2^L*R mod P by means of the addition chain starting from the least significant bit. The initial value of W is set to w ≡ 2*(2^m) mod P so as to be accommodated in m bits. The calculation can be done only by conducting modular squaring operation L times if the binary expression of L except the most significant bit includes no 1, whereas extra multiplication becomes necessary on the way if there is a bit 1 in the binary expression of L except the most significant bit. Therefore, a variable "mul", indicating whether a bit 1 has been found in the bits of L other than the most significant bit or not, is prepared (7005). Step 7010 lets W be accommodated in m bits, by subtracting a number obtained by shifting P until the most significant bit of P comes to the most significant bit of m bits. Steps 7020, 7030, 7040 and 7050 sets the most significant two bits of W to "00", which are conducted in order to let the final calculation result be accommodated in n bits. Subsequently, whether the process has reached the most significant bit or not is checked (7060). If the process has reached the most significant bit (YES in the step 7060), whether the variable mul is 1 or not is checked (7080). If the variable mul is 1 (YES in the step 7080), calculation result corresponding to intermediate bits of L has already been stored in a variable Y, therefore, W is multiplied by Y (7090) to give the final result. If the process has not reached the most significant bit yet (NO in the step 7060), whether the least significant bit of L is 1 or not is checked (7070). If the least significant bit of L is 1 (YES in the step 7070), the value of W is stored in the variable Y. Whether the variable mul is 1 or not is checked in step 7100, and if a bit 1 is found for the first time in the bits of L other than the most significant bit (NO in the step 7100), the value of W is substituted into Y (7120) and the variable mul is set to 1 (7130). The process in the step 7120 is equivalent to first substituting 1 into Y and thereafter executing Y := Y*W. Meanwhile, if a bit 1 has already been found in the bits of L other than the most significant bit (YES in the step 7100), Y is multiplied by the current value of W (7110). Subsequently, modular squaring is carried out to R by Montgomery modular multiplication (7140) and L is shifted rightward by 1 bit (7150). Thereafter, the process from the step 7060 is repeated.

The calculation of Y*Y*2^(-m) mod P of the step 7140 is equivalent to:

$$(A*A + M*P)/(2^{\wedge}m) \tag{17}$$

where:

$$M = -Y*Y*(P^{\wedge}(-1)) \bmod 2^{\wedge}m < 2^{\wedge}m \qquad (18)$$

Therefore, the following inequality holds:

$$(Y*Y + M*P)/(2^{\wedge}m) < (Y*Y + 2^{\wedge}m*P)/(2^{\wedge}m) \qquad (19)$$

Meanwhile, if we define "s" as the number of most significant bits 0 when Y is stored in m-bit memory, the following inequalities hold:

$$Y < 2^{\wedge}(m-s) \qquad (20)$$

$$Y <= 2^{\wedge} (m-s) - 1 \qquad (21)$$

$$(Y*Y+2^{\wedge}m*P)/(2^{\wedge}m) <= ((2^{\wedge}(m-s)-1)^{\wedge}2+2^{\wedge}m*P)/2^{\wedge}m \qquad (22)$$

$$= 2^{\wedge}(m-2s)-2^{\wedge}(1-s)+2^{\wedge}(-m)+P \qquad (23)$$

$$< 2^{\wedge}(m-2s)+p+1 \qquad (24)$$

Hence the number s of the most significant bits 0 of the calculation result $(Y*Y+M*P)/2^{\wedge}m$ in the step 7140 changes as s[t+1]: = 2s[t]-1 each time $(Y*Y+M*P)/2^{\wedge}m$ is calculated. Thus, when $2^{\wedge}(m-2s)$ is larger than P, the number of the consecutive most significant bits 0 becomes $s[0]*2^{\wedge}(t-1)$ after t time calculations. On the other hand, when $2^{\wedge}(m-2s)$ has become smaller than P, the bit length is determined by P. Since the most significant two bits of W are set to "00" in the steps 7020, 7030, 7040 and 7050 (s[0] = 2), the bit length after executing the step 7140 t times becomes $m-2^{\wedge}t$ or n. The bit length equals max(m-L, n) since t = log2(L).

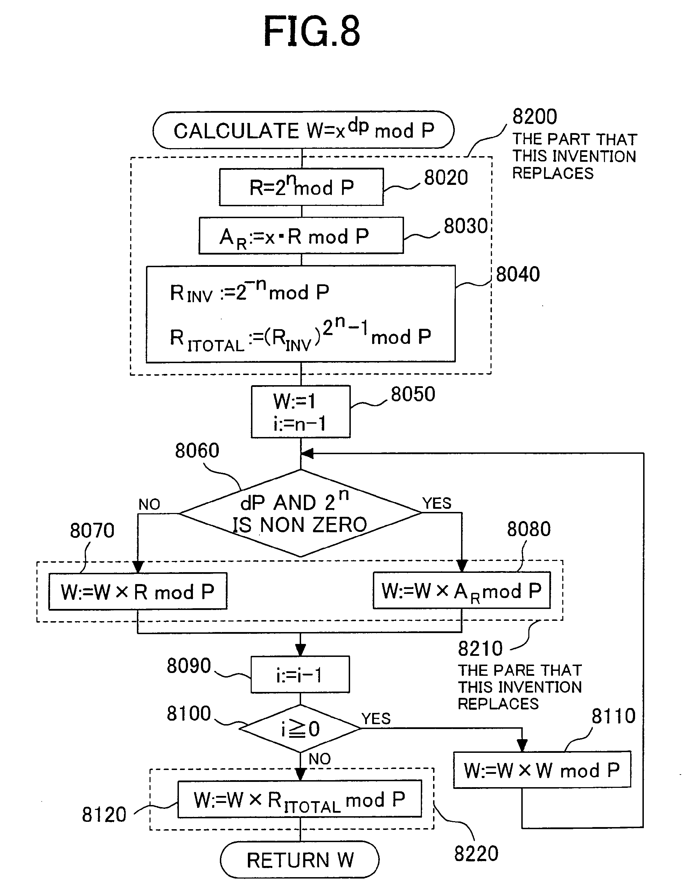

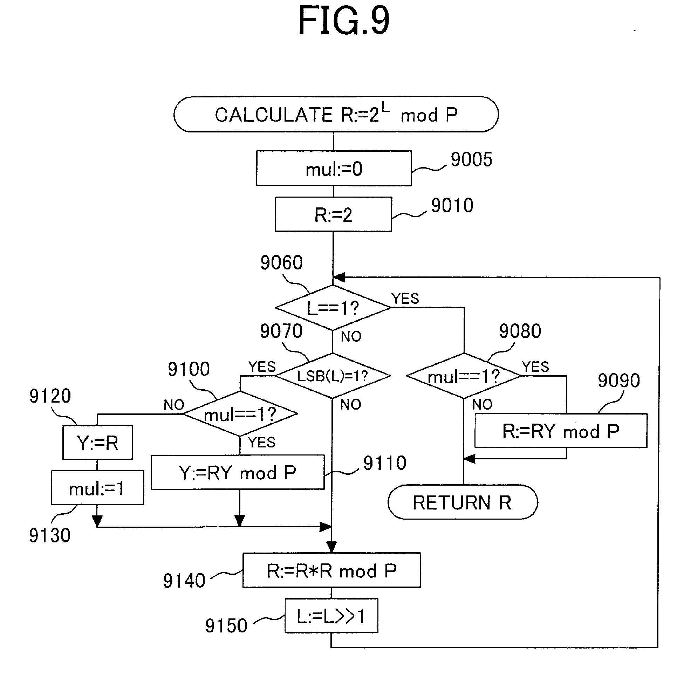

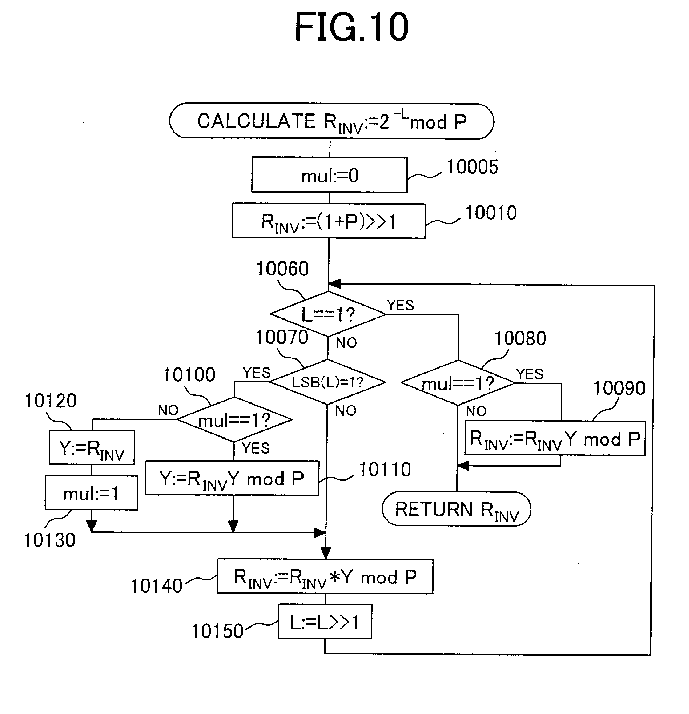

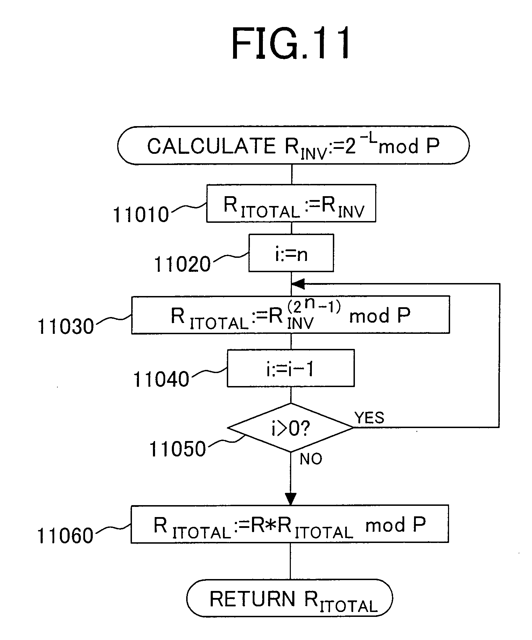

Fig. 8 is a flow chart showing an embodiment of the present invention in which an ordinary modular multiplication method is employed. In Fig. 8, "m" denotes a bit length necessary for storing the input x and "n" denotes a bit length necessary for storing P. First, $2^{\wedge}n \bmod P$ is calculated according to the flow of Fig. 9 and the result is substituted into R (8020). Subsequently, the input x is multiplied by R (8030) and a value R_ITOTAL to be used for final correction is calculated (8040). When P is a definite and fixed value, R_ITOTAL can be calculated independently of the input x and thus it is possible to previously calculate and prestore R_ITOTAL. In actual calculation, $R\_INV = 2^{\wedge}(-n) \bmod P$ is first calculated according to the flow of Fig. 10, and $R\_ITOTAL = (R\_INV)^{\wedge}(2^{\wedge}n-1) \bmod P$ is calculated based on R and R_INV according to the flow of Fig. 11. Subsequently, the initial value W of the operation is set to 1 since an ordinary modular multiplication method is used, and a value n-1 indicating the position of the most significant bit is first set to a counter i (8050). Subsequently, whether each bit value is 1 or not is checked starting from the highest bit of the exponent (8060). If the bit value is 1 (YES in the step 8060), the current value W is multiplied by A_R = xR mod P (8080). If the bit value is 0 (NO in the step 8060), the current value W is multiplied by R (meaning 1) (8070). Subsequently, the bit position is shifted rightward by 1 bit by decrementing the bit position counter i by 1 (8090) and whether the process has been completed for the least significant bit or not is checked (8100). If the process has not reached the least significant bit yet (YES in the step 8100), the current value W is squared (8110) and the above process is conducted for the next bit of the exponent. Since the process of the steps 8070 and 8080 includes the extra multiplication by R every time in comparison with the conventional process, the result has been multiplied by extra $R^{\wedge}(2^{\wedge}n-1)$ at the point when the process is completed for the least significant bit. Hence the result is finally multiplied by R_ITOTAL (8120) in order to eliminate the effect of the extra multiplication by $R^{\wedge}(2^{\wedge}n-1)$.

Fig. 9 is a flow chart showing a procedure for calculating $2^{\wedge}L \bmod P$ in the step 8020 of the embodiment of Fig. 8. The flow of Fig. 9 calculates $R :2^{\wedge}L \bmod P$ by means of the addition chain starting from the least significant bit. The calculation can be done only by conducting modular squaring operation L times if the binary expression of L except the most significant bit includes no 1, whereas extra multiplication becomes necessary on the way if there is a bit 1 in the binary expression of L except the most significant bit. A variable "mul", indicating whether a bit 1 has been found in the bits of L other than the most significant bit or not, is prepared and initialized to 0 (9005), and the value R is initialized to 2 (9010). Subsequently, whether the process has reached the most significant bit or not is checked (9060).

If the process has already reached the most significant bit (YES in the step 9060), whether the variable mul is 1 or not is checked (9080). If mul = 1 (YES in the step 9080), calculation result corresponding to intermediate bits of L has already been stored in a variable Y, therefore, R is multiplied by Y (9090) to give the final result. If the process has not reached the most significant bit yet (NO in the step 9060), whether the least significant bit of L is 1 or not is checked (9070). If the least significant bit of L is 1 (YES in the step 9070), the storing in the variable Y is conducted. Whether the variable mul is 1 or not is checked in step 9100, and if a bit 1 is found for the first time in the bits of L other than the most significant bit (NO in the step 9100), the value of R is substituted into Y (9120) and the variable mul is set to 1 (9130). The process in the step 9120 is equivalent to first substituting 1 into Y and thereafter executing Y := Y*R. Meanwhile, if a bit 1 has already been found in the bits of L other than the most significant bit (YES in the step 9100), Y is multiplied by the current value of R (9110). Subsequently, modular squaring is carried out to R (9140) and L is shifted rightward by 1 bit (9150). Thereafter, the process from the step 9060 is repeated.

Fig. 10 is a flow chart showing a procedure for calculating R_INV 2^(-n) mod P in the step 8040 of the embodiment of Fig. 8. The flow of Fig. 10 calculates R_INV :2^(-L) mod P by means of the addition chain starting from the least significant bit. The calculation can be done only by conducting modular squaring operation L times if the binary expression of L except the most significant bit includes no 1, whereas extra multiplication becomes necessary on the way if there is a bit 1 in the binary expression of L except the most significant bit. A variable "mul", indicating whether a bit 1 has been found in the bits of L other than the most significant bit or not, is prepared and initialized to 0 (10005), and the value R_INV is initialized to 1/2. The initialization to 1/2 can be done by shifting 1 rightward once. Since mere right shift of 1 gives 0, the right shift is conducted after adding P. The value P, being a large prime number, is necessarily an odd number, hence 1+P is necessarily an even number and can be shifted rightward. Subsequently, whether the process has reached the most significant bit or not is checked (10060). If the process has already reached the most significant bit (YES in the step 10060), whether the variable mul is 1 or not is checked (10080). If mul = 1 (YES in the step 10080), calculation result corresponding to intermediate bits of L has already been stored in a variable Y, therefore, R_INV is multiplied by Y (10090) to give the final result. If the process has not reached the most significant bit yet (NO in the step 10060), whether the least significant bit of L is 1 or not is checked (10070). If the least significant bit of L is 1 (YES in the step 10070), the storing in the variable Y is conducted. Whether the variable mul is 1 or not is checked in step 10100, and if a bit 1 is found for the first time in the bits of L other than the most significant bit (NO in the step 10100), the value of R_INV is substituted into Y (10120) and the variable mul is set to 1 (10130). The process in the step 10120 is equivalent to first substituting 1 into Y and thereafter executing Y := Y*R. Meanwhile, if a bit 1 has already been found in the bits of L other than the most significant bit (YES in the step 10100), Y is multiplied by the current value of R (10110). Subsequently, modular multiplication of R and Y is conducted (10140) and L is shifted rightward by 1 bit (10150). Thereafter, the process from the step 10060 is repeated.

Fig. 11 is a flow chart showing a procedure for calculating R_ITOTAL := (R_INV)^(2^n-1) mod P in the step 8040 of the embodiment of Fig. 8. The calculation is carried out by multiplying R_INV^(2^n) by R as shown in the following equation (26). The multiplicand R_INV^(2^n) is calculated by repeating modular squaring operation n times.

$$(R\_INV)^{(2^n-1)} \bmod P = R\_INV^{(2^n)} * R\_INV^{(-1)} \bmod P \tag{25}$$

$$= R\_INV^{(2^n)} * R \bmod P \tag{26}$$

First, R_ITOTAL is initialized to R_INV (11010) and a number "n", indicating the number of times of modular squaring operation to be repeated, is substituted into a variable i as a counter (11020). In each modular squaring operation, the result of modular squaring of R_ITOTAL is substituted into R_ITOTAL (11030) and the counter variable i is decremented by 1 (11040). Subsequently, the counter variable i is checked (11050), and if the counter variable i is larger than 0 (YES in the step 11050), the process from the step 11030 is repeated. When the counter variable i reached 0 (NO in the step 11050), the current value R_ITOTAL is finally multiplied by R by means of modular multiplication and the obtained value is substituted into R_ITOTAL (11060) to be returned as the final result.

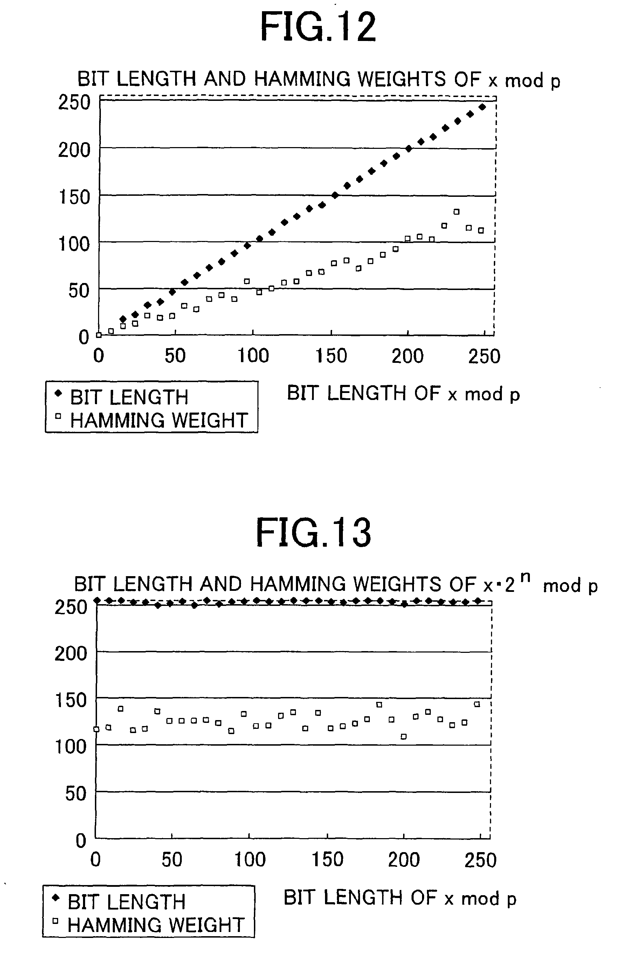

As set forth hereinabove, by the present invention, the CRT calculation employing the modular exponentiation operation can be carried out without the need of directly obtaining the remainder (x mod P) of the input value x divided by the secret prime P. Therefore, it becomes difficult to estimate the secret prime P by conventional attacking methods such as measuring electric current etc. while changing the input x. Fig. 12 shows the bit length and humming weight (the number of bits 1 in binary expression) of x mod P in the case where a conventional calculation method is employed, while Fig. 13 shows the bit length and humming weight of x*2^n mod P (which corresponds to x mod P) in the present invention. An apparent dependency relationship is seen in Fig. 12 between input data and x mod P, whereas the bit length and humming weight are almost constant independently of input data and such dependency can not be seen in Fig. 13.

The Secure modular calculation process and the modular exponentiation process of present invention have been explained in the above embodiment.

An encryption method of RSA cryptography employing Chinese Reminder Theorem comprises the steps of inputting input data x for encryption, encrypting said input data using a modulo N calculation, and storing said encrypted data, wherein, for calculating modulo N, a processing method as described above and below, particularly a Secure modular calculation, is employed.

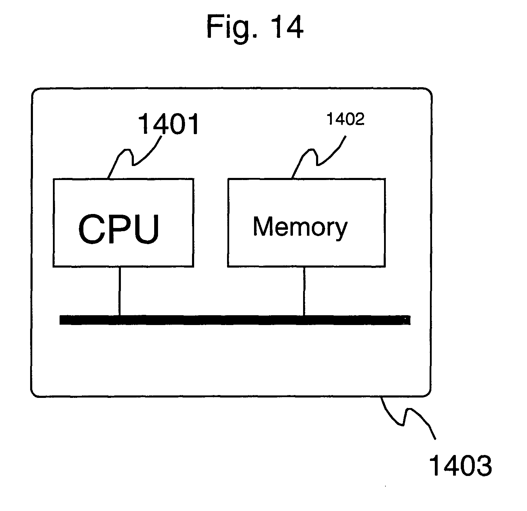

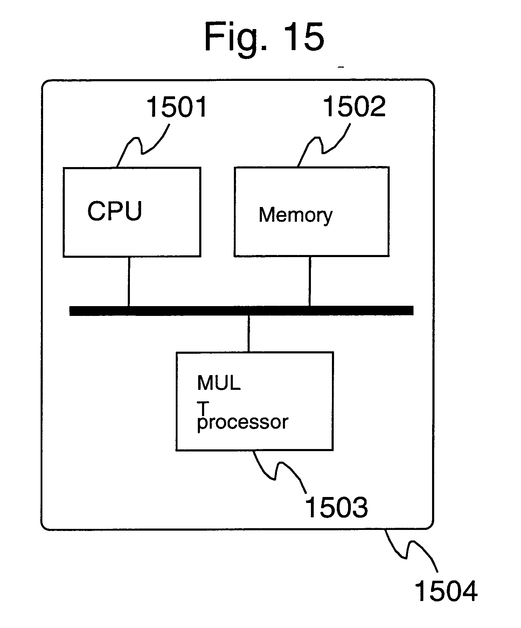

Figs. 14 and 15 show IC cards 1403 and 1503 which execute the modular calculation process and the modular exponentiation process shown in Figs. 5 to 11. Memories 1402 and 1502 store programs that are expressed with codes that CPUs 1401 and 1501 can interpret and execute. CPUs 1401 and 1501 operate according to the programs stored in memories 1402 and 1502. MULT processor 1503 (Modular calculation process unit) is used for special operation. In Fig. 15, the modular calculation process unit 1503 calculates Montgomery modular multiplication etc. The CPUs 1401 and 1501 are respectively connected to the memories 1402 and 1502.

Data corresponding to W, m, n , L, Y and mul in Fig 7, R, A_R, R_INV, R_ITOTAL and W in Fig 8, mul, R, Y and L in Fig 9 , mul, R_INV, Y and L in Fig 10, and R_ITOTAL and i in Fig 11 is stored in memories 1402 and 1502 or registers of CPUs 1401 and 1501. CPUs 1401 and 1501 operate the procedure shown in Figs. 5 to 11 according to the program in the memories 1402 and 1502. The procedure, which is shown in Figs. 5 to 11 and operated in the IC cards 1403 and 1504, CPUs 1401 and 1501 and MULT processor 1503, makes it impossible to estimate whether x is larger or smaller than P from the side channel information such as the current of bus, the executing time and the electromagnetic wave obtained from CPUs 1401 and 1501 and MULT processor 1503 and makes it enable to prevent the secret prime from leaking.

In Fig. 15, the MULT processor 1503 performs the calculations 7110 and 7090 in Fig. 7 and 8070 and 8080 in Fig.8 while the CPU 1501 operates the other operations. Because of the existence of MULT processor, a processing ability raises and an executing time decreases.

In the foregoing specification, the invention has been described with reference to specific embodiments thereof. It will, however, be evident that various modifications and changes may be made thereto without departing from the broader spirit and scope of the invention. The specification and drawings are, accordingly, to be regarded in an illustrative rather than a restrictive sense.

For example, the modular calculation process and the modular exponentiation process in Figs. 5 to 11 may be operated in IC card shown in Fig. 14 or 15, however these can be operated in other secure information processing unit.

Other aspects of the present invention are as follows:

1. A processing method for conducting a calculation modulo N, wherein:

an operand of the calculation is previously multiplied by a value V obtained as a power of a number relatively prime with the modulus N, and
the result of the above calculation is multiplied by an inverse element of the value V modulo N.

2. A processing method for conducting a modular calculation modulo N, wherein:

an operand of the modular calculation is previously multiplied by a value V obtained as a power of a number relatively prime with the modulus N, and
the result of the calculation is multiplied by an inverse element of the value V modulo N, and
the modulus N equals the product of prime numbers that are larger than 2, and
the number relatively prime with the modulus N equals 2.

3. An information processing device comprising a Montgomery modular multiplication device, for calculating $x*(2^n) \bmod P$ for an input value x larger than a prime number P, wherein:

the value $x*(2^n) \bmod P$ is calculated without explicitly obtaining $x \bmod P$, by:

calculating or previously preparing $2^{(2m+n)} \bmod P$ when the input value x has to be transformed into $x*(2^n) \bmod P$, the number n denoting the number of bits necessary and sufficient for storing the modulus P and the number m denoting the number of bits necessary for storing the input value x;
calculating $x1 = x*2^{(2m+n)}*(2^{(-m)}) \bmod P = x*2^{(m+n)} \bmod P$ by the Montgomery modular multiplication device; and
calculating $x2 := x1*(2^{(-m)}) \bmod P = x*(2^n) \bmod P$.

4. An information processing method for calculating x*(2^n) mod P for an input value x larger than a prime number P, wherein:

the value x*(2^n) mod P is calculated without explicitly obtaining x mod P, by:
calculating or previously preparing 2^(2m+n) mod P when the input value x has to be transformed into x*(2^n) mod P, the number n denoting the number of bits necessary and sufficient for storing the modulus P and the number m denoting the number of bits necessary for storing the input value x;
calculating x1 = x*2^(2m+n)*(2^(-m)) mod P = x*2^(m+n) mod P by Montgomery modular multiplication; and
calculating x2 := x1*(2^(-m)) mod P = x*(2^n) mod P.

5. An information processing device comprising a Montgomery modular multiplication device, for calculating x*(2^n) mod P for an input value x larger than a prime number P, wherein:

the value x*(2^n) mod P is calculated without explicitly obtaining x mod P, by:
calculating or previously preparing 2^(m+2n) mod P when the input value x has to be transformed into x*(2^n) mod P, the number n denoting the number of bits necessary and sufficient for storing the modulus P and the number m denoting the number of bits necessary for storing the input value x;
calculating x1 = x*2^(m+2n)*(2^(-m)) mod P = x*2^(2n) mod P by the Montgomery modular multiplication device; and
calculating x2 := x1*(2^(-n)) mod P = x*(2^n) mod P.

6. An information processing method for calculating x*(2^n) mod P for an input value x larger than a prime number P, wherein:

the value x*(2^n) mod P is calculated without explicitly obtaining x mod P, by:
calculating or previously preparing 2^(m+2n) mod P when the input value x has to be transformed into x*(2^n) mod P, the number n denoting the number of bits necessary and sufficient for storing the modulus P and the number m denoting the number of bits necessary for storing the input value x;
calculating x1 = x*2^(m+2n)*(2^(-m)) mod P = x*2^(2n) mod P by Montgomery modular multiplication; and
calculating x2 := x1*(2,^(-n)) mod P = x*(2^n) mod P.

7. An information processing device for conducting a modular exponentiation operation x^d mod P for an input value x and an exponent d, by combining results of exponentiation operations each of which is carried out for each s-bit segment successively extracted from the exponent d, wherein:

the value x^d mod P is calculated not by calculating x^d[i] mod P, the exponent d[i] denoting i-th segment of the extracted s-bit segment of the exponent d, but by:

calculating (2^n)^(2^n-1)*x^d mod P by use of (2^n)^(2^s-1)*x^d[i] mod P, the number n denoting the number of bits necessary and sufficient for storing the modulus P and the number m denoting the number of bits necessary for storing the input value x; and
calculating the value x^d mod P by multiplying the above result (2^n)^(2^n-1)*x^d mod P by 2^(-n)^(2^n-1) mod P.

8. An information processing method for conducting a modular exponentiation operation x^d mod P for an input value x and an exponent d, by combining results of exponentiation operations each of which is carried out for each s-bit segment successively extracted from the exponent d, wherein:

the value x^d mod P is calculated not by calculating x^d[i] mod P, the exponent d[i] denoting i-th segment of the extracted s-bit segment of the exponent d, but by:

calculating (2^n)^(2^n-1)*x^d mod P by use of (2^n)^(2^s-1)*x^d[i] mod P, the number n denoting the number of bits necessary and sufficient for storing the modulus P and the number m denoting the number of bits necessary for storing the input value x; and
calculating the value x^d mod P by multiplying the above result (2^n)^(2^n-1)*x^d mod P by 2^(-n)^(2^n-1) mod P.

The Secure modular calculation process and the modular exponentiation process of present invention have been explained in the above embodiment.

Figs. 14 and 15 show IC cards 1403 and 1503 which execute the modular calculation process and the modular exponentiation process shown in Figs. 5 to 11. Memories 1402 and 1502 store programs that are expressed with codes that CPUs 1401 and 1501 can interpret and execute. CPUs 1401 and 1501 operate according to the programs stored in memories 1402 and 1502. MULT processor 1503 (Modular calculation process unit) is used for special operation. In Fig. 15, the modular calculation process unit 1503 calculates Montgomery modular multiplication etc. The CPUs 1401 and 1501 are respectively connected to the memories 1402 and 1502.

Data corresponding to W, m, n , L, Y and mul in Fig 7, R, A_R, R_INV, R_ITOTAL and W in Fig 8, mul, R, Y and L in Fig 9 , mul, R_INV, Y and L in Fig 10, and R_ITOTAL and i in Fig 11 is stored in memories 1402 and 1502 or registers of CPUs 1401 and 1501. CPUs 1401 and 1501 operate the procedure shown in Figs. 5 to 11 according to the program in the memories 1402 and 1502. The procedure, which is shown in Figs. 5 to 11 and operated in the IC cards 1403 and 1504, CPUs 1401 and 1501 and MULT processor 1503, makes it impossible to estimate whether x is larger or smaller than P from the side channel information such as the current of bus, the executing time and the electromagnetic wave obtained from CPUs 1401 and 1501 and MULT processor 1503 and makes it enable to prevent the secret prime from leaking.

In Fig. 15, the MULT processor 1503 performs the calculations 7110 and 7090 in Fig. 7 and 8070 and 8080 in Fig.8 while the CPU 1501 operates the other operations. Because of the existence of MULT processor, a processing ability raises and an executing time decreases.

The modular calculation process and the modular exponentiation process described with reference to Figs. 5 to 11 may be employed in IC cards as shown in Fig. 14 or 15, but can likewise be used in other secure information processing units.

In the foregoing specification, the invention has been described with reference to specific embodiments thereof. It will, however, be evident that various modifications and changes may be made thereto without departing from the broader spirit and scope of the invention. The specification and drawings are, accordingly, to be regarded in an illustrative rather than a restrictive sense.

**Claims**

1. An information processing method for calculating $x*(2^n) \bmod P$ for an input value x larger than a prime number P, the operator ^ denoting power, wherein:

    the value $x*(2^n) \bmod P$ is calculated without explicitly obtaining $x \bmod P$, by:

    calculating or previously preparing $2^{(2m+n)} \bmod P$ when the input value x has to be transformed into $x*(2^n) \bmod P$, the number n denoting the number of bits necessary and sufficient for storing the modulus P and the number m denoting the number of bits necessary for storing the input value x;
    calculating $x1 = x*2^{(2m+n)}*(2^{(-m)}) \bmod P = x*2^{(m+n)} \bmod P$ by Montgomery modular multiplication; and
    calculating $x2 := x1*(2^{(-m)}) \bmod P = x*(2^n) \bmod P$.

2. An information processing method for calculating $x*(2^n) \bmod P$ for an input value x larger than a prime number P, the operator ^ denoting power, wherein:

    the value $x*(2^n) \bmod P$ is calculated without explicitly obtaining $x \bmod P$, by:

    calculating or previously preparing $2^{(m+2n)} \bmod P$ when the input value x has to be transformed into $x*(2^n) \bmod P$, the number n denoting the number of bits necessary and sufficient for storing the modulus P and the number m denoting the number of bits necessary for storing the input value x;
    calculating $x1 = x*2^{(m+2n)}*(2^{(-m)}) \bmod P = x*2^{(2n)} \bmod P$ by Montgomery modular multiplication; and
    calculating $x2 := x1*(2^{(-n)}) \bmod P = x*(2^n) \bmod P$.

3. An information processing method for conducting a modular exponentiation operation $x^d \bmod P$ for an input value x and an exponent d, by combining results of exponentiation operations each of which is carried out for each s-bit segment successively extracted from the exponent d, wherein:

    the value $x^d \bmod P$ is calculated not by calculating $x^{d[i]} \bmod P$, the exponent d[i] denoting i-th segment of the extracted s-bit segment of the exponent d, but by:

calculating $(2^n)^{(2^n-1)} * x^d \bmod P$ by use of $(2^n)^{(2^s-1)} * x^{d[i]} \bmod P$, the number n denoting the number of bits necessary and sufficient for storing the modulus P and the number m denoting the number of bits necessary for storing the input value x; and

calculating the value $x^d \bmod P$ by multiplying the above result $(2^n)^{(2^n-1)} * x^d \bmod P$ by $2^{(-n)^{(2^n-1)}} \bmod P$.

4. An encryption method of RSA cryptography employing Chinese Reminder Theorem, comprising inputting input data x for encryption,

   encrypting said input data using a modulo N calculation, and

   storing said encrypted data,

   wherein, for calculating modulo N, a processing method according to one of the claims 1 to 3 is employed.

5. An encryption apparatus of RSA cryptography employing Chinese Reminder Theorem comprising:

   a processing unit, wherein data x denotes input data, data P denotes secret prime, data m denotes a bit length for storing said data x, data n denotes a bit length for storing said data P, and said processing unit performs modular exponentiation operation by addition chain employing Montgomery modular multiplication, by

   operating a first process for calculating as a first reminder the product of said data x and a data denoting $2^{2n}$ or $(2^{2n}) \bmod P$ modulo said data P; and

   operating a second process for calculating the product of said first reminder and a data denoting $2^{-n}$ or $(2^{-n}) \bmod P$ modulo said data P.

6. An encryption apparatus according to Claim 5, wherein a data denoting $2^{(2n+m)} \bmod P$ or $2^{(2n)} * (2^m \bmod P) \bmod P$, and, $2^{-m}$ or $2^{-m} \bmod P$ are employed instead of a data denoting $2^{2n}$ or $2^{2n} \bmod P$.

7. An encryption apparatus according to Claim 5 or 6, further comprising;

   a memory, wherein said memory stores said data denoting $2^{(2n+m)} \bmod P$ or $2^{(2n)} * (2^m \bmod P) \bmod P$ before operating the first process.

8. An encryption apparatus according to Claim 5 or 6, further comprising;

   a memory, wherein said memory stores said data denoting $2^m$ or $2^m \bmod P$ before operating the first process.

9. A IC card comprises a encryption apparatus according to either one of Claim 5 to 8.

10. A decryption apparatus for RSA cryptography employing Chinese Reminder Theorem comprising:

    a processing unit, wherein data x denotes input data, data P denotes a secret prime, data m denotes a bit length for storing said data x, data n denotes a bit length for storing said data P, and said processing unit performs modular exponentiation operation by addition chain employing Montgomery modular multiplication, by

    operating a first process for calculating as a first reminder a product of said data x and a data denoting $2^{2n}$ or $2^{2n} \bmod P$ modulo said data P; and

    operating a second process for calculating a product of said first reminder and a data denoting $2^{-n}$ or $2^{-n} \bmod P$ modulo said data P.

11. A decryption apparatus according to Claim 10;

    wherein a data denoting $2^{(2n+m)} \bmod P$ or $2^{2n} * (2^m \bmod P) \bmod P$, and, $2^{-m}$ or $2^{-m} \bmod P$ are employed instead of a data denoting $2^{2n}$ or $2^{2n} \bmod P$.

12. A decryption apparatus according to Claim 10 or 11, further comprising a memory, wherein said memory stores said data denoting $2^{(2n+m)} \bmod P$ or $2^{2n} * (2^m \bmod P) \bmod P$ before operating the first process.

13. A decryption apparatus according to Claim 10 or 11, further comprising a memory, wherein said memory stores said data denoting $2^m$ or $2^m \bmod P$ before operating the first process.

14. An IC card comprises a decryption apparatus according to either one of Claim 10 to 13.

**15.** An encryption apparatus for RSA cryptography employing Chinese Reminder Theorem comprising:

a processing unit, wherein data x denotes input data, data P denotes secret prime, data m denotes a bit length for storing said data x, data n denotes a bit length for storing said data P, said processing unit operates modular exponentiation operation by addition chain employing Montgomery modular multiplication, by
operating a first process for calculating as a first reminder a product of said data x and a data denoting $2^{(n+m)}$ or $2^{(n+m)}$ modP modulo said data P; and
operating a second process for calculating a product of said first reminder and a data denoting $2^{-m}$ or $2^{-m}$ modP modulo said data P.

**16.** An encryption apparatus according to Claim 15; wherein a data denoting $2^{(n+2m)}$modP or $2^{(n+m)}*(2^m$ modP) modP, and, $2^{-m}$ or $2^{-m}$ modP is employed instead of a data denoting $2^{(n+m)}$ or $2^{(n+m)}$ modP.

**17.** A encryption apparatus according to Claim 15 or 16, further comprising a memory, wherein said memory stores said data denoting $2^{(n+2m)}$ modP or $2^{(n+m)}*(2^m$ modP) modP before operating the first process.

**18.** An encryption apparatus according to Claim 15 or 16, further comprising a memory, wherein said memory stores said data denoting $2^m$ or $2^m$ modP before operating the first process.

**19.** An IC card comprising an encryption apparatus according to either one of Claim 15 to 18.

**20.** A decryption apparatus for RSA cryptography employing Chinese Reminder Theorem comprising:

a processing unit, wherein data x denotes input data, data P denotes secret prime, data m denotes a bit length for storing said data x, data n denotes a bit length for storing said data P, said processing unit operates modular exponentiation operation by addition chain employing Montgomery modular multiplication, by
operating a first process for calculating as a first reminder a product of said data x and a data denoting $2^{(n+m)}$ or $2^{(n+m)}$ modP modulo said data P; and
operating a second process for calculating a product of said first reminder and a data denoting $2^{-m}$ or $2^{-m}$ modP modulo said data P.

**21.** A decryption apparatus according to Claim 20; wherein a data denoting $2^{(n+2m)}$ modP or $2^{(n+m)}*(2^m$ modP) modP, and, $2^{-m}$ or $2^{-m}$ modP is employed in stead of a data denoting $2^{(n+m)}$ or $2^{(n+m)}$ modP.

**22.** A decryption apparatus according to Claim 20 or 21, further comprising a memory, wherein said memory stores said data denoting $2^{(n+2m)}$ modP or $2^{(n+m)}*(2^m$ modP) modP before operating the first process.

**23.** A decryption apparatus according to Claim 20 or 21, further comprising a memory, wherein said memory stores said data denoting $2^m$ or $2^m$ modP before operating the first process.

**24.** An IC card comprises a decryption apparatus according to either one of Claim 20 to 23.

# FIG.1

CRT CALCULATION

$$C_p := (x \bmod P)^{dP} \bmod P$$ 1010

$$C_q := (x \bmod Q)^{dQ} \bmod Q$$ 1020

$$C := \{(C_p - C_q)Q^{-1} \bmod P\} \times Q + C_q$$ 1030

END

# FIG.2

CALCULATE $W = X^{dP} \bmod P$

2200
THE PART THAT
THIS INVENTION
REPLACES

$A = x \bmod P$ — 2020

$R := 2^n \bmod P$
$R_{sqr} := R^2 \bmod P$ — 2030

$A_R := A \times R_{sqr} \times R^{-1} \bmod P$ — 2040

$W := R$
$i := n-1$ — 2050

2060

2070 NO ⟵ $dP$ AND $2^n$ IS NON ZERO ⟶ YES 2080

$W := W \times R \times R^{-1} \bmod P$

$W := W \times A_R \times R^{-1} \bmod P$

$i := i-1$ — 2090

$i \geq 0$ — YES — 2110

2100 — NO

$W := W \times W \times R^{-1} \bmod P$

2120 — $W := W \times R^{-1} \bmod P$

$W \geq P$ — YES

2130 — NO

$W := W - P$ — 2140

RETURN W

15

# FIG.3

# FIG.4

CALCULATE $W = X^{dp} \bmod P$

4200
THE PART THAT
THIS INVENTION
REPLACES

$A = x \bmod P$ — 4020

$W := 1$
$i := n - 1$ — 4040

4050

dP AND $2^n$
IS NON ZERO

NO — 4060

YES

$W := W \times 1 \bmod P$

4070

$W := W \times A \bmod P$

$i := i - 1$ — 4080

$i \geqq 0$

4100

YES

4090

NO

$W := W \times W \bmod P$

RETURN

# FIG.5

CALCULATE $A_R = xR \bmod P$ (1)

$U := 2^m \bmod P$

$U_{sqr} := 2^{2n} U \bmod P$      5030

$A_R := x \cdot U_{sqr} \cdot U^{-1} \bmod P$      5040

$A_R := A_R \cdot R^{-1} \bmod P$

$(R := 2^n \bmod P)$      5050

CONTINUE TO 2050

# FIG.6

CALCULATE $A_R = xR \bmod P$ (2)

$U := 2^m \bmod P$

$U'_{sqr} := 2^{n+m} U \bmod P$

6030

$A_R := x \cdot U'_{sqr} \cdot U^{-1} \bmod P$

6040

$A_R := A_R \cdot U^{-1} \bmod P$

6050

CONTINUE TO 2050

# FIG.7

CALCULATE $W:=2^L U \bmod P$     $U:=2^m$

7005   $mul:=0$

7010   $W:=2 \times (2^m - 2^{(m-n)}P)$

7020   $W \geqq 2^{(m-n)}P$   YES    7030   $W:=W-2^{(m-n)}P)$

NO

7040   $W \geqq 2^{(m-n-1)}P$   YES    7050   $W:=W-2^{(m-n-1)}P)$

NO

7060   $L==1?$   YES

NO

7070   $LSB(L)=1?$    7080   $mul==1?$   YES    7090   $W:=WYU^{-1} \bmod P$

YES    NO    NO

7100   $mul==1?$

7120   NO

$Y:=W$    YES   $Y:=WYU^{-1} \bmod P$   7110

$mul:=1$

7130

RETURN W

7140   $Y:=YYU^{-1} \bmod P$

7150   $L:=L>>1$

$U^{-1}$ DENOTES
$U^{-1}:=2^{-m} \bmod P$

20

# FIG.8

CALCULATE $W = x^{dp} \bmod P$

8200
THE PART THAT
THIS INVENTION
REPLACES

$R = 2^n \bmod P$ —— 8020

$A_R := x \cdot R \bmod P$ —— 8030

$R_{INV} := 2^{-n} \bmod P$

$R_{ITOTAL} := (R_{INV})^{2^n - 1} \bmod P$ —— 8040

$W := 1$
$i := n-1$ —— 8050

8060

dP AND $2^n$
IS NON ZERO

NO          YES

8070

$W := W \times R \bmod P$

8080

$W := W \times A_R \bmod P$

8210
THE PARE THAT
THIS INVENTION
REPLACES

8090 — $i := i-1$

8100 — $i \geqq 0$    YES

NO

8110

$W := W \times W \bmod P$

8120 — $W := W \times R_{ITOTAL} \bmod P$

8220

RETURN W

# FIG.9

CALCULATE $R:=2^L$ mod P

mul:=0 — 9005

R:=2 — 9010

9060

L==1? — YES

NO

9070

LSB(L)=1? — YES

9100

mul==1? — NO

9120

Y:=R

mul:=1

9130

Y:=RY mod P — 9110

NO

9080

mul==1? — YES

NO

R:=RY mod P — 9090

RETURN R

R:=R*R mod P — 9140

L:=L≫1 — 9150

# FIG.10

CALCULATE $R_{INV} := 2^{-L} \bmod P$

mul := 0 — 10005

$R_{INV} := (1+P) \gg 1$ — 10010

10060

L == 1? — YES

10070 — NO

10100 — YES LSB(L)=1? — NO

10080 — mul == 1? — YES

10120 — NO mul == 1?

Y := $R_{INV}$

mul := 1

10130

Y := $R_{INV}$ Y mod P — 10110

10090

$R_{INV} := R_{INV}$ Y mod P

RETURN $R_{INV}$

10140 — $R_{INV} := R_{INV} * Y \bmod P$

10150 — L := L ≫ 1

# FIG.11

$$\text{CALCULATE } R_{INV} := 2^{-L} \bmod P$$

11010 — $R_{ITOTAL} := R_{INV}$

11020 — $i := n$

11030 — $R_{ITOTAL} := R_{INV}^{(2^n - 1)} \bmod P$

11040 — $i := i - 1$

11050 — $i > 0?$ — YES / NO

11060 — $R_{ITOTAL} := R * R_{ITOTAL} \bmod P$

$$\text{RETURN } R_{ITOTAL}$$

# FIG.12

### BIT LENGTH AND HAMMING WEIGHTS OF x mod p

BIT LENGTH OF x mod p

- ◆ BIT LENGTH
- □ HAMMING WEIGHT

# FIG.13

### BIT LENGTH AND HAMMING WEIGHTS OF $x \cdot 2^n$ mod p

BIT LENGTH OF x mod p

- ◆ BIT LENGTH
- □ HAMMING WEIGHT

Fig. 14

# Fig. 15

1501

1502

CPU

Memory

MUL
T
processor

1503

1504

European Patent Office

**EUROPEAN SEARCH REPORT**

Application Number

EP 03 01 8622

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 03 001362 A (GUERON SHAY ;HADAD ISAAC (IL); DISCRETIX TECHNOLOGIES LTD (IL)) 3 January 2003 (2003-01-03) * page 3 - page 6 * * page 12 * * page 30 - page 31 * * page 41 - page 43 * * page 45, paragraph 1 * * page 48, paragraph 5 - page 49, paragraph 2 * --- | 5,10 | H04L9/30 G06F7/72 |
| A | DEN BOER B ; LEMKE K ; WICKE G : "A DPA attack against the modular reduction within a CRT implementation of RSA " CRYPTOGRAPHIC HARDWARE AND EMBEDDED SYSTEMS - CHES 2002. 4TH INTERNATIONAL WORKSHOP. REVISED PAPERS (SPRINGER VERLAG, LECTURE NOTES IN COMPUTER SCIENCE VOL.2523), 15 July 2002 (2002-07-15), pages 228-243, XP002265541 Redwood Shores, CA, USA ISBN: 3-540-00409-2 * page 241 - page 242 * --- | 1-24 | |
| A | DHEM J -F ; KOEUNE F ; LEROUX P -A ; MESTRE P ; QUISQUATER J -J ; WILLEMS J -L : "A practical implementation of the timing attack " SMART CARD RESEARCH AND APPLICATIONS. THIRD INTERNATIONAL CONFERENCE, CARDIS'98 (SPRINGER VERLAG, LECTURE NOTES IN COMPUTER SCIENCE VOL. 1820), 16 September 1998 (1998-09-16), pages 1-18, XP002265542 Louvain-la-Neuve, Belgium ISBN: 3-540-67923-5 * page 16, paragraph 9 - page 17 * ----- | 1-24 | TECHNICAL FIELDS SEARCHED (Int.Cl.7) G06F H04L |

The present search report has been drawn up for all claims

| Place of search | Date of completion of the search | Examiner |
|---|---|---|
| BERLIN | 18 December 2003 | Carnerero Álvaro, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 01 8622

This annex lists the patent family members relating to the patent documents cited in  the above-mentioned European search report.
The members are as contained in the European Patent Office EDP file on
The European Patent Office is in no way liable for these particulars which are merely  given for the purpose of information.

18-12-2003

| Patent document cited in search report | Publication date | Patent family member(s) | Publication date |
|---|---|---|---|
| WO 03001362          A | 03-01-2003 | WO     03001362 A2 | 03-01-2003 |

For more details about this annex : see Official Journal of the European Patent Office, No. 12/82